# EUROPEAN PATENT APPLICATION

(11) **EP 4 685 181 A1**
(43) Date of publication of application: **28.01.2026**
(21) Application number: 24774641.5
(22) Date of filing: 04.03.2024
(51) Int. Cl.: C08L 21/00, B60C 1/00, C08L 25/16

(54) **RUBBER COMPOSITION FOR TIRES**

(30) Priority: 23.03.2023 JP 2023046726
(71) Applicant: Mitsui Chemicals, Inc., Tokyo 104-0028 (JP)
(72) Inventor: TAKAHASHI, Yosuke, Sodegaura-shi, Chiba 299-0265 (JP); MURATA, Ryunosuke, Sodegaura-shi, Chiba 299-0265 (JP); KUBOTA, Naoya, Sodegaura-shi, Chiba 299-0265 (JP); KANAYA, Hirotaka, Sodegaura-shi, Chiba 299-0265 (JP)
(74) Representative: Hoffmann Eitle
(86) International application number: PCT/JP2024/008012
(87) International publication number: WO 2024/195496

(57) **Abstract**

A rubber composition for tires includes a rubber component and a tackifier. The tackifier is a polymer that includes a structural unit derived from isopropenyltoluene and does not substantially include a structural unit derived from a C5 fraction. The tackifier has a softening point of 85°C or more and 136°C or less. The tackifier has a weight-average molecular weight of 1910 or less. The tackifier has a z-average molecular weight of less than 4000.

## Description

### TECHNICAL FIELD

The present invention relates to a rubber composition for tires.

### BACKGROUND ART

Conventionally, it is known that tires are manufactured by using a rubber composition for tires that contains a rubber component and a tackifier.

As such a rubber composition for tires, for example, a racing tire tread rubber composition including an SBR (styrene-butadiene copolymer rubber) and a copolymer resin of an aromatic vinyl compound and a C5 fraction has been proposed (for example, see Example 2 of Patent Document 1).

### Citation List

### Patent Document

Patent Document 1: Japanese Unexamined Patent Publication No. H10-195238

### SUMMARY OF THE INVENTION

### PROBLEM TO BE SOLVED BY THE INVENTION

Meanwhile, from the viewpoint of safety, tires are required to have improved wet grip properties which indicate braking performance (braking performance on a wet road surface).

The present invention provides a rubber composition for tires for producing tires with excellent wet grip properties by using a tackifier which is a polymer including a structural unit derived from isopropenyltoluene and substantially including no structural unit derived from a C5 fraction, and having a softening point in a predetermined range and a z-average molecular weight in a predetermine range.

### MEANS FOR SOLVING THE PROBLEM

The present invention [1] includes a rubber composition for tires including: a rubber component; and a tackifier, wherein the tackifier is a polymer that includes a structural unit derived from isopropenyltoluene and does not substantially include a structural unit derived from a C5 fraction, wherein the tackifier has a softening point of 85°C or more and 136°C or less, wherein the tackifier has a weight-average molecular weight of 1910 or less, and wherein the tackifier has a z-average molecular weight of less than 4000.

The present invention [2] includes the rubber composition for tires described in the above-described [1], wherein the polymer includes a structural unit derived from indene, and wherein in the polymer, the structural unit derived from indene is 35 mol% or less.

### EFFECTS OF THE INVENTION

The rubber composition for tires of the present invention includes a tackifier. The tackifier is a polymer including a structural unit derived from isopropenyltoluene and substantially including no structural unit derived from a C5 fraction. The tackifier has a softening point of 85°C or more and 136°C or less. The tackifier has a weight average molecular weight of 1910 or less. The tackifier has a z-average molecular weight of less than 4000. Therefore, a tire having excellent wet grip properties can be produced.

### BRIEF DESCRIPTION OF THE DRAWINGS

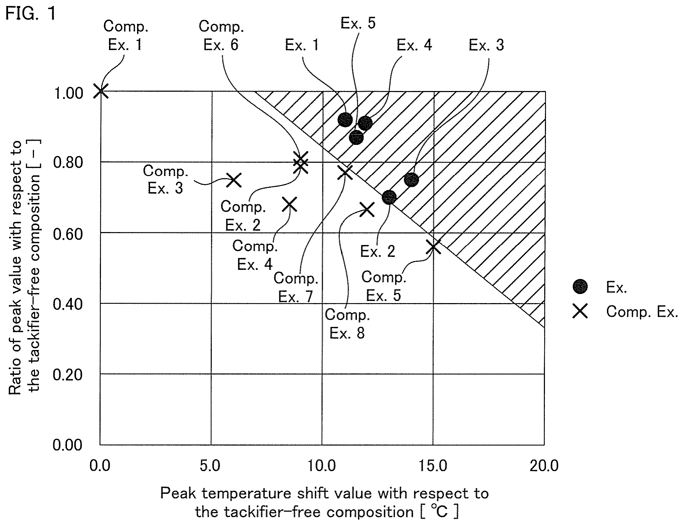

FIG. 1 is a graph showing a relationship between a peak temperature shift value with respect to a rubber composition for tires that does not contain a tackifier and a ratio of a peak value with respect to the rubber composition for tires that does not contain a tackifier.

### DESCRIPTION OF THE EMBODIMENTS

The rubber composition for tires includes a rubber component and a tackifier.

### <Rubber Component>

Examples of the rubber component include a diene rubber.

Examples of the diene rubber include natural rubber (NR), styrene butadiene rubber (SBR), butadiene rubber (BR), isoprene rubber (IR), butyl rubber (IIR), acrylonitrile butadiene rubber (NBR), ethylene propylene diene rubber (EPDM), and chloroprene rubber (CR).

The rubber component is preferably a styrene butadiene rubber (SBR).

The rubber components may be used alone or in combination of two or more.

The content ratio of the rubber component is, for example, 70 parts by mass or more, preferably 80 parts by mass or more, and for example, 95 parts by mass or less, preferably 90 parts by mass or less with respect to 100 parts by mass of the total amount of the rubber component and the tackifier.

### <Tackifier>

The tackifier is a polymer including a structural unit derived from isopropenyltoluene and substantially including no structural unit derived from a C5 fraction.

Such a polymer is formed by polymerizing a polymerization component.

The polymerization component contains isopropenyltoluene as an essential component.

Furthermore, the polymerized component does not substantially contain a C5 fraction.

A C5 fraction is obtained by refining and/or cracking petroleum. Furthermore, a C5 fraction is a fraction having a boiling point at atmospheric pressure in a range of usually -15°C or more and 45°C or less, and contains, for example, an unsaturated aliphatic hydrocarbon having 5 carbon atoms and no conjugated double bond and an unsaturated aliphatic hydrocarbon having 5 carbon atoms and a conjugated double bond.

Examples of the unsaturated aliphatic hydrocarbon having 5 carbon atoms and no conjugated double bond include 1-pentene, 2-methyl-1-butene, 3-methyl-1-butene, and 2-pentene.

Examples of the unsaturated aliphatic hydrocarbon having 5 carbon atoms and a conjugated double bond include isoprene, 1,3-pentadiene, and cyclopentadiene.

The polymerization component may also contain another component (excluding isopropenyltoluene and a C5 fraction). Examples of another component include α-methylstyrene, indene, vinyltoluene, and an unsaturated aliphatic hydrocarbon (excluding a C5 fraction).

The unsaturated aliphatic hydrocarbon (excluding a C5 fraction) is a component copolymerizable with isopropenyltoluene, α-methylstyrene, indene, and vinyltoluene, and examples thereof include a C4 fraction.

A C4 fraction is obtained by refining and/or cracking petroleum. Furthermore, a C4 fraction is a fraction having a boiling point at normal pressure in a range of usually -15°C or more and 45°C or less, and contains, for example, an unsaturated aliphatic hydrocarbon having 4 carbon atoms and no conjugated double bond and an unsaturated aliphatic hydrocarbon having 4 carbon atoms and a conjugated double bond.

Examples of the unsaturated aliphatic hydrocarbon having 4 carbon atoms and no conjugated double bond include 1-butene, isobutene, and 2-butene.

Examples of the unsaturated aliphatic hydrocarbon having 4 carbon atoms and a conjugated double bond include 1,3-butadiene.

As the other component, preferably indene is used. That is, preferably, as the polymer, a copolymer of isopropenyltoluene and indene is used.

The other components may be used alone or in combination of two or more.

Furthermore, all or a part of the monomers constituting the polymerization component may be derived from fossil fuel or biomass.

Examples of the fossil fuel include petroleum, coal, natural gas, shale gas, or combinations thereof. Biomass is any renewable natural raw materials and their residues, for example, derived from plants or animals, including fungi, yeasts, algae, and bacteria.

Furthermore, the polymer is obtained by polymerizing the polymerization component in the presence of a Friedel-Crafts catalyst.

Examples of the Friedel-Crafts catalyst include a phenol complex (e.g., a boron trifluoride phenolate complex).

The blending ratio of the Friedel-Crafts catalyst is, for example, 0.01 parts by mass or more and, for example, 1 part by mass or less with respect to 100 parts by mass of the polymerization component.

As the polymerization conditions, the polymerization temperature is, for example, -50°C or more, and, for example, 50°C or less. The polymerization time is, for example, 10 minutes or more, and, for example, 10 hours or less.

Furthermore, the above-described reaction is carried out in the presence of a solvent or absence of a solvent. The reaction is preferably carried out in the presence of a solvent.

Examples of the solvent include aliphatic hydrocarbons, alicyclic hydrocarbons, aromatic hydrocarbons, ketones, and alkyl esters. As the solvent, preferably aromatic hydrocarbons are used. Examples of the aromatic hydrocarbons include toluene and xylene. As the aromatic hydrocarbons, preferably toluene is used.

The solvents may be used alone or in combination of two or more.

In this manner, a polymer (a solution of the polymer) is obtained. As such a polymer, preferably a homopolymer of isopropenyltoluene and a copolymer of isopropenyltoluene and indene are used. As the polymer, more preferably a copolymer of isopropenyltoluene and indene is used.

In the solution of the polymer, the solid content concentration thereof is, for example, 5% by mass or more, preferably 10% by mass or more, and, for example, 70% by mass or less, preferably 60% by mass or less.

In such a polymer, the structural unit derived from isopropenyltoluene is, for example, 65 mol% or more, preferably 70 mol% or more, more preferably 80mol% or more, even more preferably 90 mol% or more, and also, for example, 100 mol% or less, preferably 95 mol% or less.

Furthermore, in such a polymer, the structural unit derived from the other component (component excluding isopropenyltoluene and a C5 fraction) is, for example, 0% or more, preferably 5% or more, and also, for example, 35% or less, preferably 30% or less, more preferably 20% or less, and even more preferably 10% or less.

In particular, when the other component is indene, the polymer includes a structural unit derived from indene. In the polymer, the structural unit derived from indene is, for example, 35 mol% or less, preferably 30 mol% or less, more preferably 20 mol% or less, even more preferably 10 mol% or less, and also, for example, 1 mol% or more, preferably 5 mol% or more, from the viewpoint of improving wet grip properties.

Furthermore, as described above, the polymer does not substantially include a structural unit derived from a C5 fraction. Specifically, in the polymer, the structural unit derived from a C5 fraction is, for example, 3 mol% or less, preferably 1 mol% or less, and more preferably 0.1 mol% or less.

The ratio of the structural unit can be measured by ¹³C-NMR spectrum.

The polymer has a softening point of 85°C or more and 136°C or less, more preferably 130°C or less, even more preferably 110°C or less, and particularly preferably 90°C or less.

When the softening point falls within the above-described range, the wet grip properties can be improved.

On the other hand, when the softening point is outside the above-described range, the wet grip properties are lowered.

The above-described softening point can be measured by a ring and ball method (in conformity with JIS K2207).

The polymer has a number-average molecular weight (Mn) of, for example, 400 or more, preferably 500 or more, and for example, 2000 or less, preferably 1200 or less, more preferably 1000 or less, even more preferably 900 or less, and particularly preferably 700 or less in terms of standard polystyrene measured by gel permeation chromatography (GPC).

When the above-described number-average molecular weight (Mn) falls within the above-described range, the wet grip properties can be improved.

The polymer has a weight-average molecular weight (Mw) of, for example, 500 or more, preferably 800 or more, and 1910 or less, preferably 1700 or less, more preferably 1500 or less, and even more preferably 1000 or less in terms of standard polystyrene measured by gel permeation chromatography (GPC).

When the above-described weight-average molecular weight (Mw) falls within the above-described range, the wet grip properties can be improved.

Furthermore, the polymer has a z-average molecular weight (Mz) of less than 4000, preferably 3000 or less, more preferably 2600 or less, even more preferably 2000 or less, particularly preferably 1500 or less, most preferably 1200 or less, and for example, 500 or more, preferably 700 or more, more preferably 1000 or more in terms of standard polystyrene measured by gel permeation chromatography (GPC).

When the above-described z-average molecular weight (Mz) falls within the above-described range, the wet grip properties can be improved.

On the other hand, when the above-described z-average molecular weight (Mz) is the above-described upper limit or more, the wet grip properties are lowered.

Furthermore, in the polymer, the ratio (Mw/Mn) of the weight-average molecular weight (Mw) to the number-average molecular weight (Mn) is, for example, 1.10 or more, preferably 1.30 or more, and for example, 2.00 or less, preferably 1.80 or less, more preferably 1.60 or less, and even more preferably 1.40 or less.

When the above-described ratio falls within the above-described range, the wet grip properties can be improved.

The tackifiers may be used alone or in combination of two or more.

The content ratio of the tackifier is, for example, 5 parts by mass or more, preferably 15 parts by mass or more, and, for example, 35 parts by mass or less, preferably 25 parts by mass or less with respect to 100 parts by mass of the rubber component.

### <Additives>

The rubber composition for tires may contain an additive in an appropriate ratio, if necessary. Examples of the additive include an antioxidant, an ultraviolet absorber, an antistatic agent, an anti-aging agent, a pigment, a filler, an antifungal agent, and a processing aid.

Examples of the filler include silica (also referred to as white carbon), carbon black, activated calcium carbonate, light calcium carbonate, heavy calcium carbonate, talc, silicic acid, and clay.

As the filler, preferably silica is used from the viewpoint of homogeneous dispersibility in the rubber matrix, excellent reinforcement properties, and versatility (cost). In other words, the filler preferably contains silica.

The silica is not particularly limited, and examples thereof include arbitrary known silica that is blended in a rubber composition used, for example, for tires.

Specifically, examples of such silica include fumed silica, calcined silica, precipitated silica, ground silica, molten silica, and colloidal silica.

The filler also preferably contains carbon black together with silica.

Examples of the carbon black include furnace carbon black such as SAF, ISAF, HAF, FEF, GPE, SRF.

The fillers may be used alone or in combination of two or more.

### <Preparation of Rubber Composition for Tires>

The rubber composition for tires is obtained by blending a rubber component, a tackifier, and an additive to be blended as necessary, and kneading them.

The rubber composition for tires can also be diluted with a known solvent. In the polymerization of the above-described polymer, when the polymerization component is polymerized in the presence of a solvent, the solvent can be used continuously for diluting the component after the polymerization.

When the rubber composition for tires is diluted, the solid content concentration thereof is, for example, 5% by mass or more, preferably 10% by mass or more, and, for example, 70% by mass or less, preferably 60% by mass or less.

### <Operations and Effects>

The rubber composition for tires includes a tackifier. The tackifier is a polymer including a structural unit derived from isopropenyltoluene and substantially including no structural unit derived from a C5 fraction. The tackifier has a softening point of 85°C or more and 136°C or less. The tackifier has a weight-average molecular weight of 1910 or less. The tackifier has a z-average molecular weight of less than 4000. Therefore, a tire having excellent wet grip properties can be produced.

Specifically, even when a tackifier is blended into a rubber composition for tires, the wet grip properties cannot be improved as long as the dispersibility of the tackifier is insufficient.

On the other hand, the rubber composition for tires is prepared in a predetermined formulation, and has a predetermined softening point and a predetermined z-average molecular weight, and thus the dispersibility thereof can be improved. As a result, the wet grip properties can be improved from the viewpoint of inhibiting the motion of the rubber during dynamic deformation of the tire to increase the energy loss.

Evaluation of the above-described dispersibility is detailed in Examples described later.

According to such a rubber composition for tires, a tire having excellent wet grip properties can be produced.

### Examples

Next, the present invention is described based on Examples and Comparative Examples. The present invention is however not limited by the following Examples. The "parts" and "%" are based on mass unless otherwise specified. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the above-described upper limit values (numeral values defined with "or less", and "less than") or the above-described lower limit values (numeral values defined with "or more", and "more than").

### <Details of Components>

The details of abbreviations used in Examples and Comparative Examples are as follows.
SSBR: Solution-polymerized polystyrene butadiene rubber (trade name "SL552" manufactured by ENEOS Materials Corporation)
IPT: Isopropenyltoluene
IND: Indene
αMS: α-methylstyrene
St: styrene
C5: C5 fraction

### <Production of Tackifier (Polymer)>

### Production Example 1

In the first stage, an autoclave having an actual volume of 1270 ml and equipped with a stirring blade, a mixture (polymerization component/toluene = 1/1 (volume ratio)) of a polymerization component (isopropenyltoluene and indene) and dehydrated-purified toluene, and a Friedel-Crafts catalyst (boron trifluoride phenolate complex diluted 10-fold with dehydrated-purified toluene (1.7-fold equivalent of phenol)) were continuously fed, and polymerized at 25°C. The mass ratio (isopropenyltoluene/indene) of isopropenyltoluene to indene was set to 75/25, the supply rate of the mixture of the polymerization component and the toluene was 1.0 liters/hour, and the supply rate of the Friedel-Crafts catalyst was 90 milliliters/hour. In this manner, a reaction mixture was produced.

Next, the reaction mixture was transferred to the autoclave in the second stage, and the polymerization reaction thereof was continued at 25°C. Then, when the total residence time in the autoclave in the first stage and the second stage reached 2 hours, the reaction mixture was continuously discharged from the autoclave. When the time three times the residence time passed, 1 liter of the reaction mixture was collected and the polymerization reaction was terminated. After the termination of the polymerization, one-normal NaOH aqueous solution was added to the collected reaction mixture to inactivate the catalyst residue. Further, the reaction mixture was washed with a large amount of water 5 times, and then the solvent and the unreacted polymerization component were distilled off under reduced pressure with an evaporator to obtain a polymer (tackifier) that was a copolymer of isopropenyltoluene and indene.

### Production Example 2

Based on the same manner as in Production Example 1, a polymer (tackifier) that was a copolymer of isopropenyltoluene and indene was obtained. However, the polymerization temperature was changed to 5°C, the mass ratio (isopropenyltoluene/indene) of isopropenyltoluene to indene was changed to 60/40, and the supply rate of the Friedel-Crafts catalyst was changed to 120 milliliters/hour.

### Production Example 3

Based on the same manner as in Production Example 1, a polymer (tackifier) which was a homopolymer of isopropenyltoluene was obtained. However, the polymerization temperature was changed to 5°C, the polymerization component was changed to isopropenyltoluene alone, and the supply rate of the Friedel-Crafts catalyst was changed to 82 milliliters/hour.

### Production Example 4

Based on the same manner as in Production Example 1, a polymer (tackifier) which was a copolymer of α-methylstyrene and styrene was obtained. However, the polymerization temperature was changed to 25°C, the polymerization component was changed to α-methylstyrene and styrene (α-methylstyrene/styrene = 60/40 (mass ratio)), and the supply rate of the Friedel-Crafts catalyst was changed to 75 milliliters/hour.

### Production Example 5

Based on the same manner as in Production Example 1, a polymer (tackifier) which was a copolymer of α-methylstyrene and styrene was obtained. However, the polymerization temperature was changed to 5°C, the polymerization component was changed to α-methylstyrene and styrene (α-methylstyrene/styrene = 60/40 (mass ratio)), and the supply rate of the Friedel-Crafts catalyst was changed to 56 milliliters/hour.

### Production Example 6

Based on the same manner as in Production Example 1, a polymer (tackifier) which was a homopolymer of α-methylstyrene was obtained. However, the polymerization temperature was changed to 5°C, the polymerization component was changed to α-methylstyrene alone, and the supply rate of the Friedel-Crafts catalyst was changed to 56 milliliters/hour.

### Production Example 7

Based on the same manner as in Production Example 1, a polymer (tackifier) which was a homopolymer of isopropenyltoluene was obtained. However, the polymerization temperature was changed to 5°C, the polymerization component was changed to isopropenyltoluene alone, and the supply rate of the Friedel-Crafts catalyst was changed to 85 milliliters/hour.

### Production Example 8

Based on the same manner as in Production Example 1, a polymer (tackifier) which was a homopolymer of isopropenyltoluene was obtained. However, the polymerization temperature was changed to 20°C, the polymerization component was changed to isopropenyltoluene alone, and the supply rate of the Friedel-Crafts catalyst was changed to 65 milliliters/hour.

### Production Example 9

Based on the same manner as in Production Example 1, a polymer (tackifier) which was a copolymer of isopropenyltoluene and a C5 fraction was obtained. However, the polymerization component was changed to isopropenyltoluene and a C5 fraction, and the supply rate of the Friedel-Crafts catalyst was changed to 105 milliliters/hour.

### Production Example 10

Based on the same manner as in Production Example 1, a polymer (tackifier) which was a copolymer of isopropenyltoluene and indene was obtained. However, the polymerization temperature was changed to 5°C, the mass ratio (isopropenyltoluene/indene) of isopropenyltoluene to indene was changed to 60/40, and the supply rate of the Friedel-Crafts catalyst was changed to 108 milliliters/hour.

### Production Example 11

Based on the same manner as in Production Example 1, a polymer (tackifier) which was a copolymer of isopropenyltoluene and indene was obtained. However, the polymerization temperature was changed to 25°C, the mass ratio (isopropenyltoluene/indene) of isopropenyltoluene to indene was changed to 75/25, and the supply rate of the Friedel-Crafts catalyst was changed to 72 milliliters/hour.

### Production Example 12

Based on the same manner as in Production Example 1, a polymer (tackifier) which was a copolymer of isopropenyltoluene and indene was obtained. However, the polymerization temperature was changed to 25°C, the mass ratio (isopropenyltoluene/indene) of isopropenyltoluene to indene was changed to 75/25, and the supply rate of the Friedel-Crafts catalyst was changed to 200 milliliters/hour.

### <Preparation of Rubber Composition for Tires>

### Examples 1 to 5 and Comparative Examples 1 to 8

Based on the description in Table 2, a rubber component and a tackifier were blended and kneaded using a Labo Plastomill [Model 4C150, manufactured by TOYO SEIKI SEISAKU-SHO, LTD.] at a temperature of 160°C and the number of rotor revolutions of 40rpm for about 5 minutes. In this manner, a rubber composition for tires was prepared.

### <Evaluations>

### [Structural Unit of Each Component]

The structural unit of each component in the polymer of each Production Example was determined by the analysis of ¹³C-NMR spectra under the following conditions. The results are shown in Table 1.

### {Conditions}

Device: AVANCE III cryo-500 type nuclear magnetic resonance spectrometer manufactured by Bruker BioSpin Group
Measured nucleus: 13C (125MHz)
Measurement mode: Single pulse proton broadband decoupling
Pulse width: 45° (5.00 µsec)
Points: 64k
Measuring range :250 ppm(-55 to 195 ppm)
Repetition time: 5.5 seconds
Accumulated number: 128 times
Measurement solvent: orthodichlorobenzene/benzene-d6 (4/1 (volume ratio))
Sample concentration: 60 mg/0.6 mL
Measurement temperature :120°C
Window Functions: exponential (BF: 1.0 Hz)
Chemical shift standard: δδ signal 29.73ppm

### [Softening point]

The polymer of each Production Example was measured by the ring and ball method in conformity with JIS K2207. The results are shown in Table 1.

### [Number-average Molecular Weight (Mn), Weight-average Molecular Weight (Mw), Z-average Molecular Weight (Mz), and Mw/Mn]

Regarding the polymer of each Production Example, the number-average molecular weight (Mn), weight-average molecular weight (Mw), and z-average molecular weight (Mz) in terms of standard polystyrene measured by gel permeation chromatography (GPC) were measured based on the following measurement conditions, and Mw/Mn was calculated. The results are shown in Table 1.

### {Measurement Conditions}

Equipment: GPC HLC-8320 (manufactured by TOSOH CORPORATION)
Solvent: Tetrahydrofuran
Column: TSKgel G7000×1, TSKgel G4000×2, TSKgel G2000×1 (all manufactured by Tosoh Corporation)
Flow rate: 1.0 ml/min
Sample: 20mg/mL tetrahydrofuran solution
Column temperature: 40°C
Detector: Differential refractive index detector
Injection volume: 50µl

### [Viscoelasticity]

A predetermined amount of the rubber composition for tires of each of Examples and Comparative Examples was filled in a SUS mold form and pressurized at a gauge pressure of 9 MPa for 4 minutes using a manual hot pressing machine (PEWR-30 manufactured by Shinto Metal Industries, Ltd.) at a heating plate temperature of 150°C, and thereafter transferred to a cooling plate at a temperature of 20°C, compressed at a gauge pressure of 9MPa, and cooled for 3 minutes. In this manner, a press sheet of length 65 mm × width 65 mm × thickness 2 mm was produced for measurement. Next, a test piece was produced by punching the measurement press sheet into a dimension of a width 3mm.

Regarding the test piece, the tan δ peak temperature, the tan δ peak value, and the tan δ peak value at -30°C at a temperature variance of -100 to 200°C were measured under the conditions of a tensile mode, a frequency 1Hz, a strain setting 0.05%, and a rate of temperature increase 3°C/min using a rheometer (DVA-225 manufactured by IT Sokuryo Seigyo Co., Ltd.). The results are shown in Table 2.

In addition, with respect to a rubber composition for tires into which no tackifier was blended (hereinafter, may be referred to as a "tackifier-free composition"), the changes in the tan δ peak temperature and tan δ peak value of each of Examples and Comparative Examples into which a tackifier was blended were calculated. Specifically, a peak temperature shift value (the tan δ peak temperature of each of Examples and Comparative Examples - the tan δ peak temperature of Comparative Example 1) with respect to the tackifier-free composition, and a ratio (the tan δ peak value of each of Examples and Comparative Examples/the tan δ peak value of Comparative Example 1) of the peak value with respect to the tackifier-free composition were calculated. The results are shown in Table 2.

### <Consideration>

FIG. 1 shows the relationship between the peak temperature shift value with respect to the tackifier-free composition and the ratio of the peak value with respect to the tackifier-free composition.

In FIG. 1, the peak temperature shift value with respect to the tackifier-free composition increases toward the right side. When the peak temperature shift value with respect to the tackifier-free composition increases, and the dispersibility is non-uniform, a broad tan δ peak derived from the tackifier alone is observed on the high temperature side. Therefore, when the dispersibility is non-uniform, the peak temperature shift value according to the addition amount decreases. Thus, it can be seen that the tackifier has excellent dispersibility.

Further, in FIG. 1, the ratio of the peak value to with respect to the tackifier-free composition approaches 1 toward the upper side. When the dispersibility is non-uniform, a broad tan δ peak derived from the tackifier alone is observed on the high temperature side. Therefore, the ratio of the peak value with respect to the tackifier-free composition decreases in response to the ratio. Thus, it can be seen that when the ratio of the peak value with respect to the tackifier-free composition approaches 1, the tackifier has excellent dispersibility.

That is, in FIG. 1, it can be seen that the dispersibility of the tackifier is improved toward the upper right side (specifically, in the shaded region of FIG. 1).

When the dispersibility of the tackifier is improved, the wet grip properties can be improved from the viewpoint of inhibiting the motion of the rubber during dynamic deformation of the tire to increase the energy loss.

FIG. 1 shows that Examples 1 to 5, which use a predetermined tackifier having a predetermined formulation, a predetermined softening point, a predetermined weight-average molecular weight, and a predetermined z-average molecular weight, are located on the upper right side as compared with Comparative Examples 1 to 8, which do not use a predetermined tackifier. This shows that in Examples 1 to 5 which use a predetermined tackifier, the dispersibility of the tackifier can be improved and the wet grip properties can be improved as compared with in Comparative Examples 1 to 8 which do not use a predetermined tackifier.

It is also known that the deformation of a tire in the range of 10⁴ (10 to the fourth power) to 10⁶ (10 to the sixth power) Hz corresponds to the deformation caused by fine irregularities on a road surface. The frequency range is considered to be located on the low temperature side when it is converted to temperature in terms of the time-temperature conversion rule of the viscoelasticity. It is also reported in the literature that a tan δ at around -30 to -15°C correlates with the frictional force of the tire on a wet road surface. Therefore, when the tan δ peak value at -30°C is high, the wet grip properties can be improved.

Then, Examples 1 to 5 which use a predetermined tackifier exhibit a higher tan δ peak value at -30°C than those of Comparative Examples 1 to 6 which do not use a predetermined tackifier. This shows that Examples 1 to 5 have better wet grip properties than those of Comparative Examples 1 to 8.

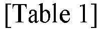

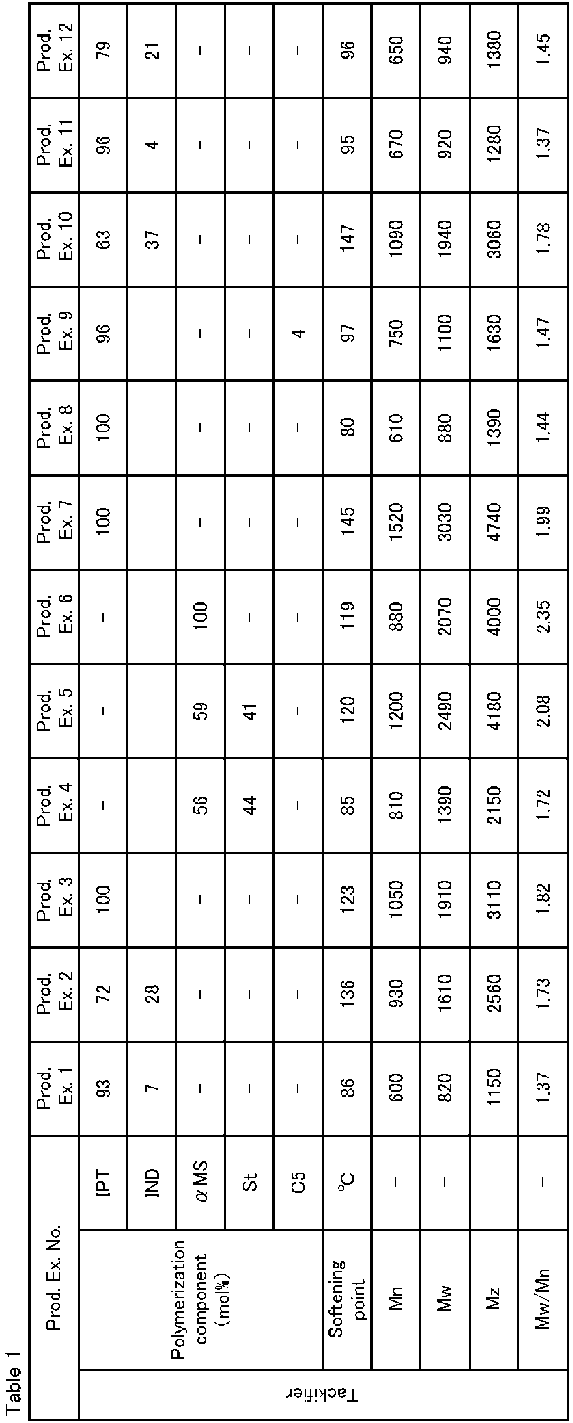

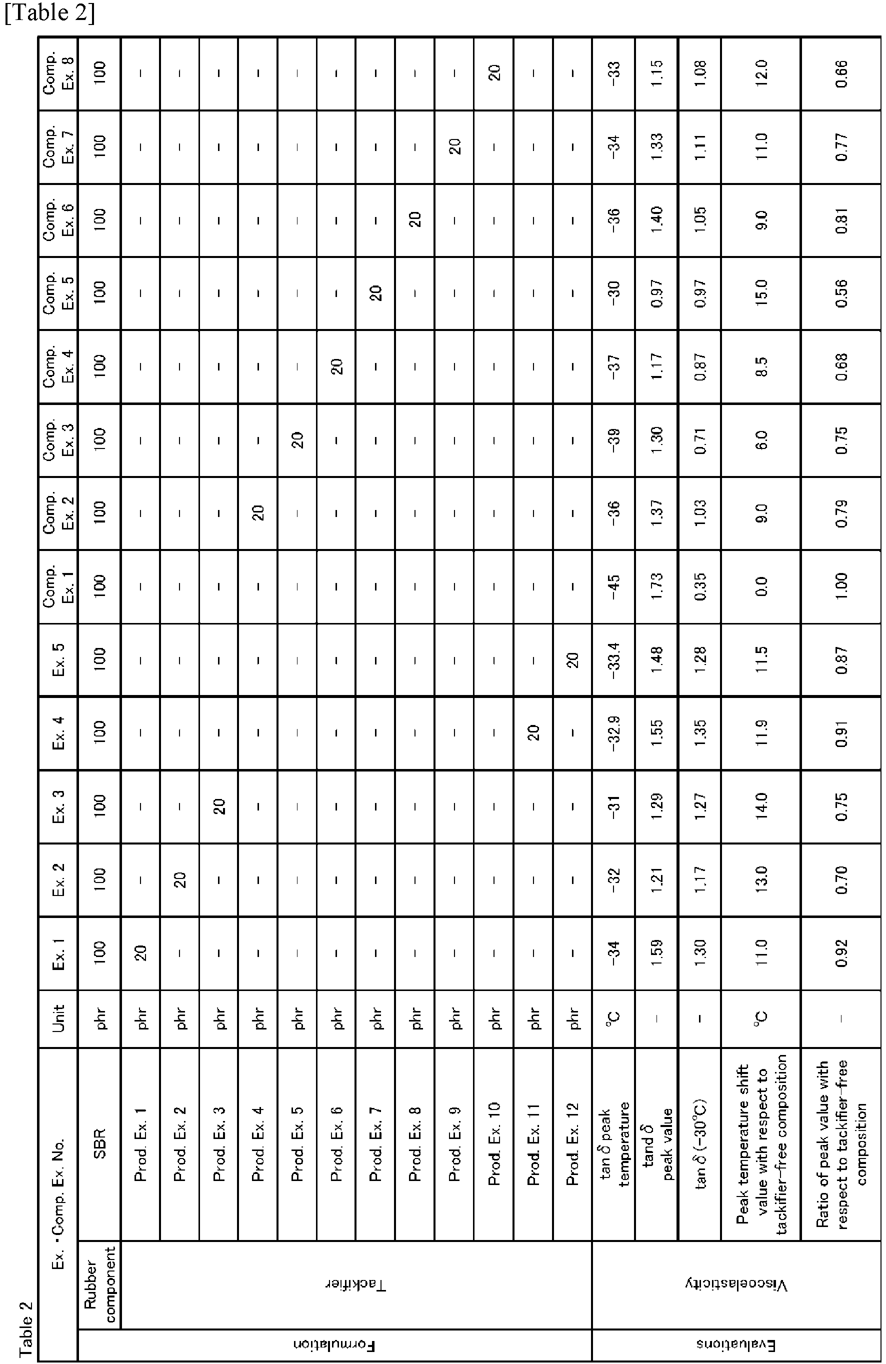

## Claims

1. A rubber composition for tires comprising: a rubber component; and a tackifier,
wherein the tackifier is a polymer that includes a structural unit derived from isopropenyltoluene and does not substantially include a structural unit derived from a C5 fraction,
wherein the tackifier has a softening point of 85°C or more and 136°C or less,
wherein the tackifier has a weight-average molecular weight of 1910 or less, and
wherein the tackifier has a z-average molecular weight of less than 4000.

2. The rubber composition for tires according to claim 1,
wherein the polymer includes a structural unit derived from indene, and
wherein in the polymer, the structural unit derived from indene is 35 mol% or less.
